Europäisches Patentamt

(19) European Patent Office     (11) Publication number:     **0 055 390**
Office européen des brevets                            **B1**

(12)                    **EUROPEAN PATENT SPECIFICATION**

(45) Date of publication of patent specification: **26.02.86**     (51) Int. Cl.⁴: **G 11 B 17/32, G 11 B 5/60,**
                                                                    **G 11 B 17/02, G 11 B 23/02**
(21) Application number: **81109765.8**

(22) Date of filing: **19.11.81**

(54) Flexible record disk data storage apparatus.

(30) Priority: **31.12.80 US 221951**

(43) Date of publication of application:
**07.07.82 Bulletin 82/27**

(45) Publication of the grant of the patent:
**26.02.86 Bulletin 86/09**

(84) Designated Contracting States:
**DE FR GB IT**

(56) References cited:
**DE-A-2 735 317**
**US-A-3 225 338**
**US-A-4 003 091**

**Patent Abstracts of Japan Vol. 1, No. 30, 29
March 1977 page 1079E76
IBM TECHNICAL DISCLOSURE BULLETIN Vol.
23, No. 4, September 1980 New York M.R.
HATCHETT "Dual-Use Data Cartridge" pages
1652 to 1653**

(73) Proprietor: **International Business Machines
Corporation
Old Orchard Road
Armonk, N.Y. 10504 (US)**

(72) Inventor: **Karol, Kenneth Norman
6720 Nanini Drive
Tucson Arizona 85704 (US)**

(74) Representative: **Hobbs, Francis John
IBM United Kingdom Patent Operations Hursley
Park
Winchester, Hants, SO21 2JN (GB)**

Courier Press, Leamington Spa, England.

## Description

This invention relates to data storage apparatus of the type comprising a flexible record disk mounted for rotation relative to a stationary Bernoulli surface.

Present systems for magnetic recording on flexible disks require a platform on which a rotating disk can be supported. A disk rotating near a stationary plate interacts with it in such a manner that if a source of air flow is provided at the disk's axis, an attractive force is created between them. This Bernoulli coupling force between disk and plate provides the means for repetitively and effectively positioning the rotating disk relative to the stationary plate. Positioning is achieved because of a balance of inertial, internal, external and fluid dynamic stresses created at the plate-disk interface (PDI). As a result of this balance of stresses, a plate-to-disk separation is established which is a function of various system parameters, including disk radial coordinate, rotational frequency, air source flow rate and fluid kinematic viscosity.

In a flexible disk non-contact recording system, a transducer head is required to protrude into the plane of the disk in order to achieve transducer-disk spacings which permit digital recording at desired high bit densities. Such protrusions create local instabilities in the PDI, which in turn affects the head-to-disk spacing. Accordingly, it is advantageous to employ a transducer incorporating a ring stabilizer device such as the head described in US Patent Specification 4,003,091. The fluid dynamic interaction of such a ring-stabilized head with the rotating disk, acts to pull the disk into the vicinity of the head, and also acts to damp out PDI instabilities which would have been created had the disk head stabilizer effects not been present. In such a Bernoulli-type recording system, the transducer head remains spaced from the disk surface, unlike other flexible disk recorders in which the transducer is in contact with the disk surface.

In previous Bernoulli-type recording devices employing ring-stabilized transducer heads, it has been necessary to support the rotating flexible disk on a flat Bernoulli plate made to relatively small tolerances, such as ± 0.004 cm, in order to obtain satisfactory performances. This requirement for such small tolerances on flatness increases the cost of manufacturing the devices and makes such devices less attractive, particularly since these devices are intended primarily as low cost products.

In Patent Abstracts of Japan Vol. 1, No. 30, 29 March 1977, page 1079 E76 a rotary disk device not using a ring-stabilized transducer head is disclosed wherein during rotation the stability of the sheet-like disk is aerodynamically improved by making the backing plate curved and by providing it with apertures.

The present invention eliminates the need to employ a flat Bernoulli plate made to small tolerances in a flexible record disk apparatus employing a ring-stabilized transducer head.

Data storage apparatus comprising a flexible record disk mounted for rotation over a rigid Bernoulli backing plate and supported, in operation, on a cushion of air generated between it and the backing plate when the disk is rotated by a drive shaft passing through an opening in the backing plate and a transducer head of the ring-stabilized type to perform data transducing operations on the surface of the disk facing the backing plate, the backing plate being provided with an elongate opening extending through it in a substantially radial direction with respect to the axis of the disk to permit introduction of the transducer head into the plane of rotation of the disk, is characterized, according to the invention, in that the drive shaft closely fits the opening in the backing plate and in that the surface of the backing plate facing the disk is slightly concave and of part-cylindrical form with the generators of the cylinder parallel to the major axis of the elongate opening and is provided with a plurality of circular orifices therethrough, the orifices being 2 mm diameter and spaced from each other by a distance of 10 mm along 30 degree radial lines and so disposed that they are radially offset from each other in adjacent lines and being of such size and so positioned that when the disk is rotated at 1580 rpm air is drawn from the underside of the backing plate through the orifices to provide such a cushion of air between the disk and the backing plate that the head-to-disk surface spacing is stabilized by the ring-stabilized transducer head.

The Bernoulli plate can range in concavity in a direction parallel to the path of movement of the transducer and is provided with a small number of small orifices through which air may be drawn. By allowing the proper amount of air to be drawn into the space over the full surface between the disk and the Bernoulli plate, the flatness of the plate is not critical. When the disk rotates, air is sucked into the orifices from the underside of the plate and distributed as a dynamically flowing cushion between the disk and the plate surface by the staggered position of the orifices. In so doing, a cushion of air is created which allows control of the head-to-disk surface spacing to be taken over by the ring-stabilized transducer.

How the invention can be carried out will now be described by way of example, with reference to the accompanying drawings, in which:—

FIG. 1 is a plan view of a Bernoulli plate used in data storage apparatus embodying the present invention;

FIG. 2 is a side view of the Bernoulli plate of FIG. 1, illustrating the concavity of the plate;

FIG. 3 is a plan view, partly in section, illustrating the operation of a data storage apparatus according to the invention; and

FIG. 4 is a cross-sectional view along line 4—4 of Fig. 3 illustrating the stabilizing action between the flexible record disk and the ring-stabilized transducer head.

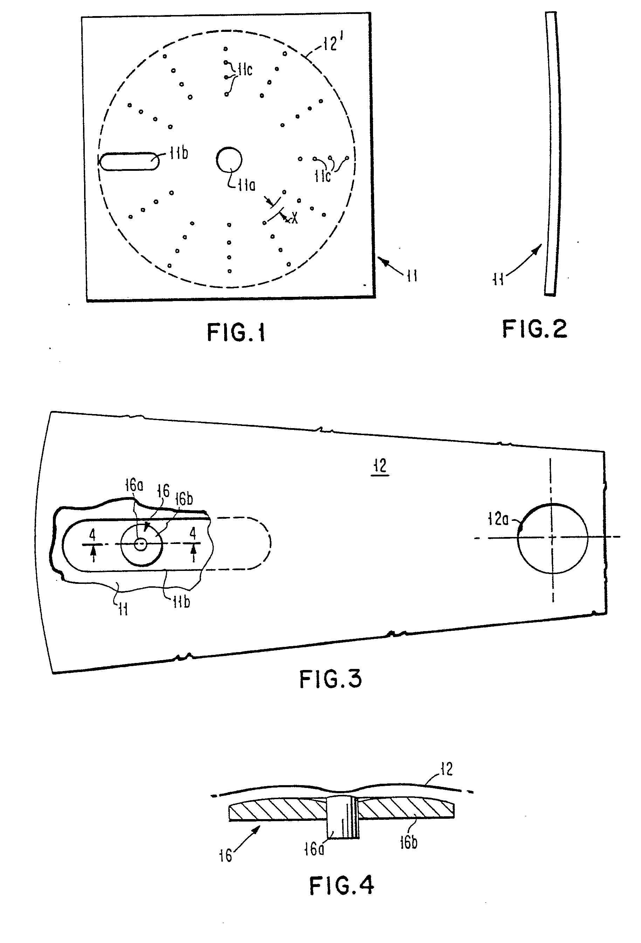

A Bernoulli plate 11 (FIG. 1) is substantially square and is provided with a central opening 11a

for providing a closely fitting driving connection to a flexible disk from a drive motor (not shown) disposed below plate 11. The position of such a flexible disk relative to plate 11 is represented by the dotted outline 12' in FIG. 1. A transducer head is movable in an elongate slot 11b radially of plate 11 to permit the transducer to cooperate with different concentric record tracks on the flexible magnetic disk, as is well known in the art.

In accordance with this invention, plate 11 is also provided with a number of small orifices 11c through which air may be drawn when the flexible disk is rotating, the air forming a cushion between the flexible disk and Bernoulli plate 11. For ease of manufacture, openings 11c may be disposed on lines extending radially from the centre of plate 11, as shown in FIG. 1. To ensure a cushion of air between the disk and Bernoulli plate 11, orifices 11c in adjacent radial lines are offset from each other radially, this offset being represented by X in FIG. 1.

An important feature is that plate 11 is provided with a slight concavity on its surface facing the flexible disk. This is shown in FIG. 2, with the trough of the concavity extending through opening 11b. It will be understood that the concavity shown in FIG. 2 is exaggerated for illustrative purposes.

FIG. 3 illustrates the operating relationship between the flexible disk 12, transducer head 16 and Bernoulli plate 11. The flexible disk 12 is mounted above plate 11 and is connected at its centre 12a by clutch means to a drive motor whose driving connection extends through, and is a close fit in, opening 11a in plate 11. To magnetically read or write on disk 11, the transducer 16 is provided which extends through the slot 11b in plate 11 and is movable radially of disk 12 (by means not shown) to position the transducer adjacent different concentric record tracks of disk 12. The transducer 16 is of the ring-stabilized type described in US Patent 4,003,091. Such a ring-stabilized transducer operates to pull the flexible disk towards the transducer and to provide a stable transducer-to-disk surface spacing relationship. This attraction and stabilizing action is illustrated in FIG. 4, which shows disk 12 drawn towards ring-stabilized transducer 16, but spaced therefrom for non-contact recording. Ring-stabilized transducer 16 includes a central transducer portion 16a and a surrounding stabilizing ring 16b.

Orifices 11c allow such an amount of air to enter the space between disk 12 and the Bernoulli plate 11 that the flatness of the plate is not critical. In so doing, a cushion of air is created which allows control of the transducer-to-disk surface spacing to be taken over by the ring-stabilized transducer 16 and stabilized. When the disk rotates, air is drawn into orifices 11c from the underside of the plate 11 and distributed as a cushion between disk 12 and the plate surface, the staggered or offset relationship of orifices 11c in adjacent radial lines helping to minimize turbulence and ensure such an air cushion.

A number of plates having different amounts of concavity were fabricated and assembled into cartridges for testing. The plates ranged from one which was just perceptibly concave to one having a trough 0.5 mm deep, and all performed satisfactorily. In these tests, Bernoulli plates having a thickness of 1.37 mm were provided with 44 orifices 11c having a diameter of 2.0 mm and spaced from each other on 30 degree radial lines as illustrated in FIG. 1 by a distance of 10.0 mm. The flexible disk was rotated at a speed of 1580 rpm and a ring-stabilized transducer as shown in US 4,003,091 was employed. These tests indicated an excellent disk-to-head relationship and stabilized operation of the flexible disk in non-contact operation, with a disk to transducer spacing in the order of microns.

It will be understood that in actual use, the Bernoulli plate may be placed in a cartridge for mounting of a flexible disk drive provided with a motor for rotating disk 12, and with an actuator for moving transducer 16 to different concentric tracks on disk 12.

**Claims**

1. Data storage apparatus comprising a flexible record disk (12) mounted for rotation over a rigid Bernoulli backing plate (11) and supported, in operation, on a cushion of air generated between it and the backing plate when the disk is rotated by a drive shaft passing through an opening (11a) in the backing plate and a transducer head (16) of the ring-stabilized type to perform data transducing operations on the surface of the disk facing the backing plate, the backing plate being provided with an elongate opening (11b) extending through it in a substantially radial direction with respect to the axis of the disk to permit introduction of the transducer head into the plane of rotation of the disk, characterized in that the drive shaft closely fits the opening in the backing plate and in that the surface of the backing plate facing the disk is slightly concave and of part-cylindrical form with the generators of the cylinder parallel to the major axis of the elongate opening and is provided with a plurality of circular orifices therethrough, the orifices being 2 mm diameter and spaced from each other by a distance of 10 mm along 30 degree radial lines and so disposed that they are radially offset from each other in adjacent lines and being of such size and so positioned that when the disk is rotated at 1580 rpm air is drawn from the underside of the backing plate through the orifices to provide such a cushion of air between the disk and the backing plate that the head-to-disk surface spacing is stabilized by the ring-stabilized transducer head.

2. Apparatus as claimed in claim 1, in which there are forty-four orifices in the Bernoulli backing plate.

3. Apparatus as claimed in claim 1 or claim 2, including a cartridge enclosing the disk and the backing plate.

## Patentansprüche

1. Datenspeichervorrichtung mit einer biegsamen Aufzeichnungsplatte (12), welche drehbar über einer starren Bernoulli-Stützplatte (11) angebracht ist und im Betrieb auf einem Luftkissen getragen wird, welches zwischen ihr und der Stützplatte erzeugt wird, wenn die Aufzeichnungsplatte durch eine durch eine Öffnung (11a) in der Stützplatte verlaufende Antriebswelle gedreht wird, und einem Wandlerkopf (16) des ringstabilisierten Typs zur Durchführung von Datenwandlungsvorgängen auf der der Stützplatte zugekehrten Oberfläche der Aufzeichnungsplatte, wobei die Stützplatte mit einem sich in einer im wesentlichen radialen Richtung in Bezug auf die Achse der Aufzeichnungsplatte durch sie erstreckenden Langloch (11b) versehen ist, damit das Einführen des Wandlerkopfes in die Drehebene der Aufzeichnungsplatte möglich ist, dadurch gekennzeichnet, daß die Antriebswelle in die Öffnung der Stützplatte eng eingepaßt ist und daß die der Aufzeichnungsplatte zugekehrte Oberfläche der Stützplatte leicht konkav und teilzylindrischer Form mit zur Hauptachse des Langloches parallelen Erzeugenden des Zylinders ist und mit einer Anzahl von sie durchsetzenden kreisförmigen Öffnungen versehen ist, wobei die Öffnungen 2 mm im Durchmesser sind und in einem Abstand von 10 mm voneinander längs unter einem Winkel von 30° angeordneter radialer Linien liegen und so angeordnet sind, daß sie in benachbarten Linien radial gegeneinander versetzt sind, und eine solche Größe haben und so liegen, daß, wenn die Aufzeichnungsplatte mit 1580 min$^{-1}$ gedreht wird, Luft von der Unterseite der Stützplatte durch die Öffnungen gezogen wird und ein solches Luftkissen zwischen Aufzeichnungsplatte und Stützplatte liefert, daß der Abstand zwischen Kopf- und Aufzeichnungsplattenoberfläche durch den ringstabilisierten Wandlerkopf stabilisiert wird.

2. Vorrichtung nach Anspruch 1, bei welcher vierundvierzig Öffnungen in der Bernoulli-Stützplatte vorhanden sind.

3. Vorrichtung nach Anspruch 1 oder Anspruch 2, welche eine die Aufzeichnungsplatte und die Stützplatte umschließende Kassette enthält.

## Revendications

1. Appareil d'enregistrement de données comprenant un disque d'enregistrement souple (12) monté pour tourner au-dessus d'une plaque d'appui de Bernoulli rigide (11) et supporté, en fonctionnement, par un coussin d'air engendré entre lui-même et la plaque d'appui lorsque le disque est entraîné en rotation par un arbre d'entraînement passant à travers une ouverture (11a) de la plaque d'appui, et une tête de transducteur (16) du type à stabilisateur annulaire destinée à exécuter des opérations de transduction de données sur la surface du disque qui fait face à la plaque d'appui, la plaque d'appui étant munie d'une ouverture allongée (11b) qui la traverse dans une direction sensiblement radiale par rapport à l'axe du disque pour permettre d'introduire la tête de transducteur dans le plan de rotation du disque, caractérisé en ce que l'arbre d'entraînement s'ajuste étroitement dans l'ouvertute de la plaque d'appui et en ce que la surface de la plaque d'appui qui fait face au disque est légèrement concave et de forme partiellement cylindrique, les génératrices du cylindre étant parallèles au grand axe de l'ouvertute allongée, et est munie d'une pluralité d'orifices circulaires qui la traversent, les orifices étant de 2 mm de diamètre et espacés les uns des autres d'une distance de 10 mm le long de lignes radiales décalées de 30 degrés et disposés de manière qu'ils soient décalés radialement les uns par rapport aux autres sur les lignes adjacentes et étant d'une dimension telle et positionnés de telle manière que, lorsque le disque est entraîné en rotation à 1580 tr/mn, de l'air soit attiré en provenance de la face inférieure de la plaque d'appui à travers les orifices pour former entre le disque et la plaque d'appui un coussin d'air tel que l'espacement entre la tête et la surface du disque soit stabilisé par la tête de transducteur à stabilisateur annulaire.

2. Appareil selon la revendication 1, dans lequel il y a quarante quatre orifices dans la plaque d'appui de Bernoulli.

3. Appareil selon la revendication 1 ou la revendication 2, comprenant une cartouche qui renferme le disque et la plaque d'appui.

0 055 390

FIG.1

FIG.2

FIG.3

FIG.4